# EUROPÄISCHE PATENTANMELDUNG

(11) **EP 1 470 848 A1**
(43) Veröffentlichungstag der Anmeldung: **27.10.2004**
(21) Anmeldenummer: 03405289.4
(22) Anmeldetag: 24.04.2003
(51) Int. Cl.: B01D 33/06, B01D 33/44, B01D 35/12, B01D 36/02

(54) **Filtereinrichtung und Verfahren zur periodischen Reinigung eines Filters**

(71) Anmelder: Utisol Technologies AG, 6304 Zug (CH)
(72) Erfinder:
(74) Vertreter: Frei, Alexandra Sarah

(57) **Zusammenfassung**

In einer Filtereinrichtung (1) und einem Verfahren zur periodischen Reinigung eines Filters einer Wasseraufbereitungs- oder Abwasserreinigungsanlage ist ein Rotationsfilter (2) in einer eigenen Filterkammer (3) angeordnet, deren Boden (4) einer Kontur des Rotationsfilters folgend ausgebildet ist. Dadurch, dass eine eigene Filterkammer vorliegt, kann das Rotationsfilter gereinigt werden, ohne dass andere Teile einer Filteranlage ausser Betrieb genommen werden müssen, und ohne dass das Rotationsfilter (2) demontiert und aus der Filterkammer (3) entfernt werden muss. Es werden also weder Hebekranen noch gesonderte Reinigungsbecken benötigt.

## Beschreibung

Die Erfindung bezieht sich auf das Gebiet der Filtertechnik, insbesondere auf eine Filtereinrichtung und ein Verfahren zur periodischen Reinigung eines Filters einer Wasseraufbereitungs- oder Abwasserreinigungsanlage gemäss dem Oberbegriff der Patentansprüche 1 und 10.

### STAND DER TECHNIK

In Filteranlagen für Abwasser oder Trinkwasser werden stehende oder rotierend angeordnete Filterscheiben oder -Lamellen verwendet, die typischerweise mit Membranfiltern bestückt sind. Eine Vielzahl von Filterlamellen bildet eine Filtereinheit. Beispielsweise sind rechteckige Filterlamellen zu quaderförmigen Filtereinheiten verbunden, oder sind trapez- oder kreissegmentförmige Filterlamellen zu einer zylindrischen Anordnung zusammengestellt. In EP-B-1 149 619 ist eine Filtereinrichtung offenbart, in welcher aus segmentförmigen Filterlamellen Stapel gebildet sind, und diese Stapel wiederum zu einem im wesentlichen zylindrischen Rotationsfilter verbunden sind. Das Rotationsfilter wird in einem Becken mit dem zu reinigendem Wasser eingetaucht betrieben. Trotz verschiedener Vorkehrungen zur Verhinderung von Schmutzablagerungen an den Filtern ist eine periodische Reinigung von Filtereinheiten erforderlich. Dabei werden die Filtereinheiten, beispielsweise ein ganzes Rotationsfilter oder einzelne Segmente, mit Hebekranen aus dem Becken gehoben und in ein Reinigungsbecken transportiert. Das Reinigungsbecken ist mit einer Reinigungslösung gefüllt, die eine chemische Reinigung der Filtermembranen bewirkt. Zudem findet eine grobmechanische manuelle Reinigung durch beispielsweise Abspritzen statt. Das beschriebene Vorgehen ist umständlich und zeitraubend.

### DARSTELLUNG DER ERFINDUNG

Es ist deshalb Aufgabe der Erfindung, eine Filtereinrichtung und ein Verfahren zur periodischen Reinigung eines Filters einer Wasseraufbereitungs- oder Abwasserreinigungsanlage der eingangs genannten Art zu schaffen, welche die Nachteile des Standes der Technik beheben.

Diese Aufgabe lösen eine Filtereinrichtung und ein Verfahren zur periodischen Reinigung eines Filters einer Wasseraufbereitungs- oder Abwasserreinigungsanlage mit den Merkmalen der Patentansprüche 1 und 10.

In der erfindungsgemässen Filtereinrichtung ist also ein Rotationsfilter in einer eigenen Filterkammer angeordnet, deren Boden einer Kontur des Rotationsfilters folgend ausgebildet ist. Dadurch, dass eine eigene Filterkammer vorliegt, kann das Rotationsfilter in situ gereinigt werden, ohne dass andere Teile einer Filteranlage ausser Betrieb genommen werden müssen, und ohne dass das Rotationsfilter demontiert und aus der Filterkammer entfernt werden muss. Es werden also weder Hebekranen noch gesonderte Reinigungsbecken benötigt. Komplikationen durch das Lösen und wieder Anschliessen von Leitungen entfallen, ebenso das Positionieren beim Einbau der gereinigten Filter im Belebungsbecken in der laufenden Anlage. Ferner wird aufgrund der Form des Bodens der Filterkammer weniger Reinigungsflüssigkeit benötigt. Durch die Drehung des Rotationsfilters während der Reinigung wird noch weniger Reinigungsflüssigkeit benötigt, und ist auch das Rotationsfilter für eine manuelle Vor- oder Grobreinigung besser zugänglich.

Im Verfahren zur periodischen Reinigung der Filtereinrichtung, d.h. insbesondere des Rotationsfilters, wird das in der Filterkammer vorhandene Wasser abgelassen oder ausgepumpt, die Filterkammer bis etwas unter die Mitte des Rotationsfilters mit Reinigungsflüssigkeit gefüllt und eine chemische Reinigung unter Drehung des Rotationsfilters vorgenommen. Vorzugsweise wird zwischen dem Ablassen des Wassers und dem Einfüllen der Reinigungsflüssigkeit die mechanische Grobreinigung bei Drehung des Rotationsfilters durchgeführt.

In einer bevorzugten Ausführungsform der Erfindung ist die Filterkammer mit einem Hauptbecken, beispielsweise einem Belebungsbecken einer Wasseraufbereitungsanlage über eine Pumpe verbunden. Diese pumpt Wasser über einen ersten Überlauf, der über einem Betriebspegel der Filterkammer liegt, in die Filterkammer. Über einen zweiten Überlauf, der einen Betriebspegel der Filterkammer definiert, läuft das Wasser in das Hauptbecken zurück. Zur Entleerung der Filterkammer zur periodischen Reinigung muss also nur die Pumpe abgestellt werden und mittels beispielsweise einer Hilfspumpe und einem Schlauch und/oder über einen Ablauf die Filterkammer geleert werden. Ein Abtrennen der Filterkammer von anderen wasserführenden Teilen der Anlage geschieht in diesem Fall also durch Abstellen der Pumpe, ein Herstellen von Verbindungen zu den anderen wasserführenden Teilen der Anlage durch Einschalten der Pumpe.

Mit dem Begriff "Wasser" oder "Schmutzwasser" wird in der vorliegenden Anmeldung jeweils Abwasser oder aufzubereitendes Trinkwasser bezeichnet. Grundsätzlich ist die Erfindung auch auf Filteranlagen für andere Flüssigkeiten anwendbar, die Vorteile der in situ Reinigung sind aber bei den bei der Wasseraufbereitung verwendeten grossen und schweren Filtern besonders ausgeprägt.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine Seitenansicht parallel zu einer Drehachse; und
- Figur 2: eine Frontalansicht senkrecht zur einer Drehachse eines Rotationsfilters in einer erfindungsgemässen Filterkammer.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

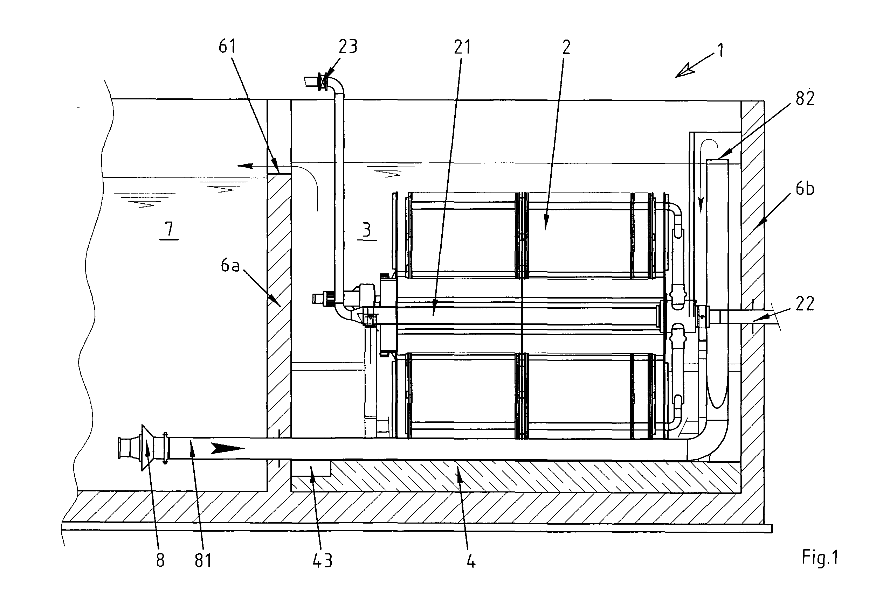

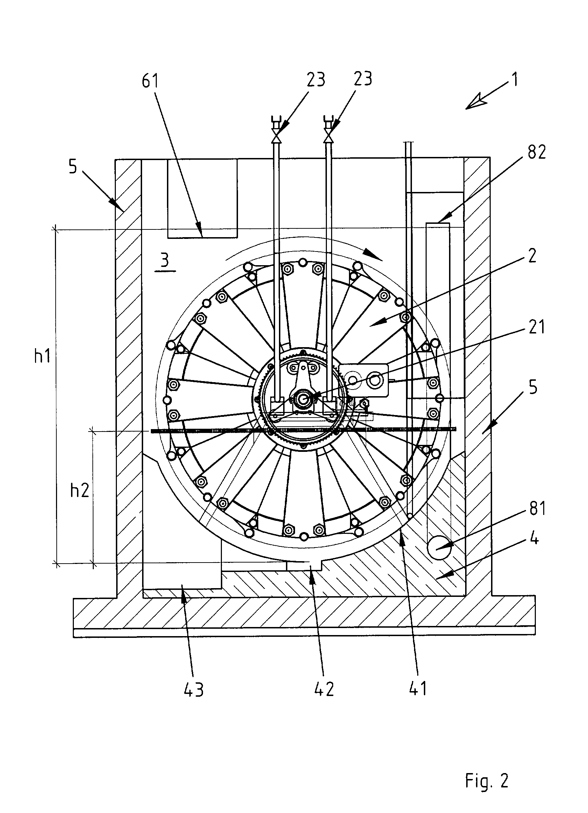

Die Figuren 1 und 2 zeigen eine Seitenansicht respektive eine Frontalansicht einer erfindungsgemässen Filtereinrichtung 1. Diese weist ein Rotationsfilter 2 auf, welches in einer Filterkammer 3 drehbar gelagert ist. Die Filterkammer 3 wird durch Seitenwände 5, eine erste Stirnwand 6a und eine zweite Stirnwand 6b sowie einen Boden 4, gebildet. Eine Oberfläche des Bodens 4 ist im wesentlichen in der Form eines halben Hohlzylinders 41 ausgebildet. Der Boden 4 weist eine Ablaufrinne 42 zum Entleeren der Filterkammer 3 und einen Pumpensumpf 43 auf. Das Rotationsfilter 2 ist um eine Drehachse 21 drehbar gelagert, an deren einem Ende eine Saugleitung für Permeat 22, das heisst gefiltertes Wasser, durch die zweite Stirnwand 6b geführt ist. Am anderen Ende weist die Drehachse 21 eine Spülluftzuführung 23 zum Einbringen von Luft zur Reinigung des Rotationsfilters 2 während eines Filterbetriebs auf.

Die Filterkammer 3 ist vorzugsweise angrenzend an ein Hauptbecken, beispielsweise einem Belebungsbecken 7 einer Kläranlage, angeordnet und von diesem durch beispielsweise die erste Stirnwand 6a getrennt. Ein oberer Rand der ersten Stirnwand 6a wirkt als Überlauf 61 von der Filterkammer 3 zum Belebungsbecken 7. Durch eine Rezirkulationspumpe 8 wird im Filterbetrieb der Filterkammer 3 Wasser aus einem Bodenbereich des Belebungsbeckens 7 durch eine Rezirkulationsleitung 81 und über einen Überlauf der Rezirkulationsleitung 82 in die Filterkammer 3 gepumpt. Eine Höhe des Überlaufs der Rezirkulationsleitung 82 ist grösser als eine Höhe des Überlaufs 61, so dass sich im Filterbetrieb ein zwischen diesen beiden Höhen liegender Wasserpegel h1 in der Filterkammer 3 einstellt.

Je nach herrschenden Platzverhältnissen kann die Filterkammer 3 auch in grösserem Abstand von dem Belebungsbecken 7 angeordnet sein, wobei an die Stelle des Überlaufs 61 eine Überlaufleitung tritt. In beiden Fällen ist das Belebungsbecken 7 bezüglich des zu reinigenden Wassers respektive eines Wasserkreislaufs abtrennbar mit der Filterkammer 3 verbunden.

In einer bevorzugten Ausführungsform der Erfindung beträgt ein Aussenradius des Rotationsfilters 2 ca. 170 cm und ein Innenradius des halben Hohlzylinders 41 ca. 180 cm. Ein Abstand zwischen dem Boden 4 respektive dem halben Hohlzylinder 41 und dem Rotationsfilter 2 entlang dessen Unterseite beträgt also beispielsweise 5 bis 20 cm, vorzugsweise annähernd 10 cm. Eine Breite der Filterkammer 3 ist möglichst klein gehalten und beträgt beispielsweise ebenfalls ca. zwei mal 5 bis 20 cm mehr als der Aussenradius des Rotationsfilters. Eine Länge des Rotationsfilters 2 beträgt ca. 500 cm, eine entsprechende Länge der Filterkammer 3 ca. 570 cm. Die Länge der Filterkammer 3 ist ebenfalls möglichst klein zu halten, um den Bedarf an Reinigungsflüssigkeit klein zu halten. Gleichzeitig muss aber ausreichend Raum für den Einbau und den Unterhalt aller in der Filterkammer 3 angeordneten Einrichtungen vorhanden sein.

In einem Normalbetrieb, also im Filterbetrieb der Filtereinrichtung 1 ist das Rotationsfilter 2 vollständig im zu filtrierenden Wasser eingetaucht. Ein Wasserspiegel h1 bezüglich eines tiefsten Punktes des halben Hohlzylinders 41 beträgt dabei ca. 380 cm. In einem Reinigungsbetrieb wird die Filterkammer 3 mit Reinigungsflüssigkeit gefüllt, so dass durch Drehen des Rotationsfilters 2 alle Filterelemente untergetaucht werden können. Dazu reicht es, wenn ein Spiegel der Reinigungsflüssigkeit etwas unter der Drehachse 21 liegt, beispielsweise auf einer Höhe h2 von ca. 150 cm.

### BEZUGSZEICHENLISTE

- 1: Filtereinrichtung
- 2: Rotationsfilter
- 21: Drehachse
- 22: Saugleitung für Permeat
- 23: Spülluftzuführung
- 3: Filterkammer
- 4: Boden
- 41: halber Hohlzylinder
- 42: Ablaufrinne
- 43: Pumpensumpf
- 5: Seitenwand
- 6a: erste Stirnwand
- 6b: zweite Stirnwand
- 61: Überlauf
- 7: Belebungsbecken, Hauptbecken
- 8: Rezirkulationspumpe
- 81: Rezirkulationsleitung
- 82: Überlauf der Rezirkulationsleitung

## Patentansprüche

1. Filtereinrichtung (1) für eine Wasseraufbereitungs- oder Abwasserreinigungsanlage, aufweisend ein Becken zur Aufnahme von zu filterndem Wasser und ein darin angeordnetes im wesentlichen zylinderförmiges Rotationsfilter (2) mit einer horizontalen Drehachse (21), **dadurch gekennzeichnet,**
**dass** das Rotationsfilter (2) in einer eigenen Filterkammer (3) angeordnet ist, und ein Boden (4) der Filterkammer (3) einer Kontur des Rotationsfilters (2) folgend ausgebildet ist.

2. Filtereinrichtung (1) nach Anspruch 1, wobei der Boden (4) der Filterkammer (3) einen halben Hohlzylinder (41) bildet.

3. Filtereinrichtung (1) nach Anspruch 2, wobei die Drehachse (21) des Rotationsfilters (2) mindestens annähernd mit einer Zylinderachse des halben Hohlzylinders (41) zusammenfällt.

4. Filtereinrichtung (1) nach einem der vorherigen Ansprüche, wobei eine senkrecht zur Drehachse (21) des Rotationsfilters (2) verlaufende Stirnwand (6b) der Filterkammer (3) ein Mittel (22) zum Absaugen von Permeat aufweist.

5. Filtereinrichtung (1) nach einem der vorherigen Ansprüche, wobei die Filterkammer (3) abtrennbar mit einem Hauptbecken (7), insbesondere einem Belebungsbecken (7), verbunden ist.

6. Filtereinrichtung (1) nach Anspruch 5, aufweisend eine Pumpe (8) zum Einbringen von Flüssigkeit aus dem Hauptbecken (7) über einen ersten Überlauf (82) in die Filterkammer (3), und einen tiefer liegenden zweiten Überlauf (61) zum Rückfluss der Flüssigkeit von der Filterkammer (3) in das Hauptbecken (7) aufweist.

7. Filtereinrichtung (1) nach Anspruch 6, wobei die Filterkammer (3) angrenzend an das Hauptbecken (7) angeordnet und durch eine Wand (6a) mit einem Überlauf (61) von diesem getrennt ist.

8. Filtereinrichtung (1) nach einem der vorherigen Ansprüche, wobei der Boden (4) der Filterkammer (3) Mittel (42) zur getrennten Entleerung der Filterkammer (3) ohne Entleerung des Hauptbeckens (7) aufweist.

9. Filtereinrichtung (1) nach einem der vorherigen Ansprüche, aufweisend zwei oder mehr Rotationsfilter (2), wobei jedes Rotationsfilter (2) jeweils in einer eigenen, zugeordneten Filterkammer (3) angeordnet ist.

10. Verfahren zur periodischen Reinigung einer Filtereinrichtung gemäss einem der Ansprüche 1 bis 8, **dadurch gekennzeichnet, dass** das Verfahren die folgenden Schritte aufweist:
- Abtrennen der Filterkammer (3) von anderen wasserführenden Teilen (7) der Anlage,
- Auspumpen oder Ablassen von in der Filterkammer (3) vorhandenem Wasser,
- Füllen der Filterkammer (3) mit Reinigungsflüssigkeit bis annähernd unterhalb die Drehachse (21) des Rotationsfilters (2),
- Drehen des Rotationsfilters (2),
- Auspumpen oder Ablassen der gebrauchten Reinigungsflüssigkeit,
- Wiederherstellen von Verbindungen zu den anderen wasserführenden Teilen der Anlage.

11. Verfahren gemäss Anspruch 10, wobei in einem Zwischenschritt das Rotationsfilters für eine mechanische Grobreinigung in Drehung versetzt wird.
